(19) Europäisches Patentamt

European Patent Office

Office européen des brevets

(11) **EP 1 886 246 B1**

(12) **EUROPEAN PATENT SPECIFICATION**

(45) Date of publication and mention of the grant of the patent:
**06.07.2011 Bulletin 2011/27**

(21) Application number: **05756209.2**

(22) Date of filing: **28.05.2005**

(51) Int Cl.:
*G06K 7/10* (2006.01)  *G06K 9/36* (2006.01)
*G06K 7/00* (2006.01)  *G06K 9/80* (2006.01)
*G06K 19/08* (2006.01)

(86) International application number:
**PCT/US2005/019178**

(87) International publication number:
**WO 2006/112866 (26.10.2006 Gazette 2006/43)**

(54) **VISUAL CODE METHOD FOR CAMERA-EQUIPPED MOBILE DEVICES**

VISUELLES CODEVERFAHREN FÜR MIT KAMERA AUSGESTATTETE MOBILE EINRICHTUNGEN

METHODE DE CODE VISUEL POUR DISPOSITIFS MOBILES EQUIPES D'UNE CAMERA

(84) Designated Contracting States:
**AT BE BG CH CY CZ DE DK EE ES FI FR GB GR HU IE IS IT LI LT LU MC NL PL PT RO SE SI SK TR**

(43) Date of publication of application:
**13.02.2008 Bulletin 2008/07**

(73) Proprietor: **Scanbuy, Inc.**
**New York, NY 10018 (US)**

(72) Inventors:
• **ROHS, Michael**
  **8092 Zürich (CH)**

• **GFELLER, Beat**
  **4653 Obergoesgen (CH)**

(74) Representative: **Maggs, Michael Norman**
**Kilburn & Strode LLP**
**20 Red Lion Street**
**London WC1R 4PJ (GB)**

(56) References cited:
**US-A1- 2002 104 884   US-A1- 2004 011 872**
**US-B1- 6 832 729   US-B2- 6 604 682**

**Description**

## TECHNICAL FIELD OF THE INVENTION

The present invention relates to the field of decoding machine readable codes utilizing camera-equipped mobile devices. More specifically, the present invention discloses a proprietary visual code which is capable of being decoded and utilized by virtually any camera-equipped mobile device.

## BACKGROUND ART

Barcodes have been utilized for identifying and pricing objects for more than thirty years, Most typically, barcodes are used in retail to identify the item of merchandise. For example, a gallon of milk may contain a barcode that, when scanned, will notify the cashier of the price of the milk.

Yet in recent years, barcodes have acquired new purposes as computers and barcode scanners have become more portable. The circuitry required to scan a conventional one-dimensional barcode can now be housed in a device as small as a typical keychain. As a result, many mobile telephones, personal digital assistants ("PDAs"), and pagers can be retrofitted with or connected to a laser-based scanning device. This allows the mobile device to function as a scanner capable of storing hundreds or thousands of scanned barcodes.

Mobile devices with attached scanners have allowed for the development of a new niche in the wireless electronics business. Some companies have developed software and hardware which allows a user to scan any barcode and be redirected to media information (e.g., a website, product description, price, etc.) about the scanned product. These programs provide a link between the physical and online world which previously, did not exist.

However, mobile devices with attached scanners possess some drawbacks which have curtailed their expansion into the mobile marketplace. First, there are few mobile devices produced for the general public that contain integrated laser-based scanners. Therefore, for a user to acquire scanning capability for a mobile device, he/she must purchase additional equipment. The additional scanning equipment also adds size and weight to the mobile device, thereby reducing its mobility.

Currently, many cell phones and mobile devices are available with built-in cameras. The explosion of the availability of affordable digital cameras and their inclusion into mobile devices is driven by several factors. One of the most important is the recent availability of inexpensive image sensors based on CMOS technology. The cameras on these devices provide a means for capturing the barcode information which was previously only accessible via a laser-based scanner. Decoding barcodes images from digital cameras included in mobile devices presents several difficult problems. These problems go well beyond the challenges addressed in commercial barcode readers.

Therefore, there clearly exists a need for a visual code system which is capable of being decoded on a camera-equipped mobile device. The visual code system should be able to be decoded from a wide range of angles and distances for use in different applications.

A method of decoding a visual code according to the precharacterising portion of claim 1 is disclosed in US-B2-6604682.

## DISCLOSURE OF THE INVENTION

According to the present invention a method of decoding a visual code is characterised by those features set out in the characterising portion of claim 1.

Enhancing mobile devices in this manner is promising, because they are in constant reach of their users and are thus available in many everyday situations. They provide continuous wireless connectivity, and models with integrated cameras are becoming more and more popular. The ability to detect objects in the user's immediate vicinity strengthens the role of mobile phones in m-commerce, education, and gaming scenarios. Additionally, it offers a natural way of interaction and makes data entry more convenient.

The claimed method may provide a basis for superimposing textual or graphical information over the camera image in near real-time, providing the user with the sense of "augmented reality". This allows for a wide assortment of application possibilities in situations where information is to be closely linked to physical objects.

An example is the maintenance of devices or apparatuses in the field. For example, individual parts of an apparatus may be associated with different visual codes. By decoding different visual codes, graphical information, which is aligned with the items in the image, can be superimposed over the camera image. Further application possibilities include showing maintenance instructions, ordering spare parts, checking a maintenance schedule, etc. Other closely related applications include convenient order placing in mail-order catalogs, entering reference numbers in online banking applications, linking up-to-date online content to newspapers, supporting mobile marketing advertising campaigns, integration with TV commercials, vote-now, or buy-now TV spots, booking tickets for events, and simplifying interaction with the mobile device itself.

The method of the present invention preferably includes built-in orientation-independent coordinate system, rotation angle determination, tilting determination, and distance determination that enable a large number of applications, such as item selection and form entry. The recognition algorithm may precisely determine the coordinates of a targeted point relative to the coordinate system that is defined by the visual code. The coordinates may be independent of the orientation, tilting, or rotation of the visual code in the camera image. This allows the application to associate each point on the viewed image (and therefore arbitrarily shaped areas) with information and with specific operations. In this manner, a single visual code can be associated with multiple such areas (e.g., the individual cells of a table or elements and regions of an image).

The recognition algorithm may provide a rotation angle of the visual code in the camera image as an additional input parameter. This can be employed to simplify the interaction with the mobile device. Simply by changing the orientation of the mobile device, different information is displaced, without requiring any interactions via the keypad. Horizontal and vertical tilting may be used was an additional input parameter in the same manner as described above (i.e., associating different information with different tilting angles). The mapping between the image coordinate system and the code coordinate system may also be used to un-warp projective distortion in the camera image, which allows the automatic capture of form elements. Individual fields of the printed form may be un-warped to remove the distortion and thus prepare them for further processing, such as transmitting them to an online server.

### Interaction Scenarios

New interaction possibilities open up when mobile phones or PDAs are enhanced to act as sensors for real-world objects. The gap between the physical world surrounding the user and the virtual world is narrowed by offering a natural way of "picking up" data in everyday situations. Information becomes collocated with physical entities and is thus situated and grounded in the real-world context. Mobile phones are in an excellent position to contribute to this vision, because they are ubiquitously available devices, constantly within reach of the user. The short interaction time required for recognizing codes is crucial for usability in a mobile setting. It does not require much effort on behalf of the user and takes just a few seconds.

There are many application scenarios which could take advantage of using visual codes: In mail-order catalogs, items could be selected by scanning visual codes to conveniently place orders. In online banking applications, long reference codes or transaction numbers often need to be manually copied from printed forms. Visual codes and mobile phones could replace expensive dedicated devices which perform this task. In newspapers, visual codes could be used to store or rate newspaper articles, to get background information related to an advertisement, or for updates on information which quickly gets obsolete, like stock quotes and weather forecasts. Using the code coordinate system, it is possible to define printed image maps with predefined sensitive areas that are associated with online content. In this way, a single code can be associated with multiple items: For example, areas on a geographic map could be linked to weather forecasts corresponding to those regions and each row in a printed table containing stock quotes could be linked to a chart which is displayed on the phone.

In the emerging area of mobile marketing, visual codes could be used to simplify SMS campaigns and SMS lotteries. In an advertising campaign Coca Cola printed code numbers on the labels of 160 million soft-drink bottles. By sending a number via SMS, customers got logos, ring tones, and greeting cards, and could take part in a lottery. 5.9 million SMS messages were sent, which corresponds to a response ratio of 3.7 %. Using visual codes would make the process more convenient for the user and might result in even higher attendance in such campaigns, which would be commercially very interesting.

The proposed 2-dimensional codes are also suitable for display on electronic screens, such as computer monitors, TV screens, public wall displays, and even on the tiny screens of handheld devices. Questionnaires, surveys, and polls on TV (like selecting the best candidate of a TV show) could be realized by overlaying visual codes over the screen image. This idea also has commercial implications. The music company Polydor used SMS as a mobile response channel in a TV spot advertising a CD. Viewers could order the CD via SMS prior to the official release date, which immediately increased sales figures. Again, using visual codes, the response ratio might be substantially increased. Camera-equipped mobile phones are not only capable of retrieving an object ID, but can also be used for more complex forms of interaction. Our code recognition system may also provide the phone's orientation, amount of rotation, and coordinates of the image center.

The present invention preferably provides a visual code system which utilizes an orientation-independent coordinate system that is defined by a visual code and the associated recognition algorithm that determines the coordinates of a targeted point in the camera image relative to that coordinate system.

The present invention also preferably provides a visual code system which associates multiple regions of an image with a single code, wherein each region is linked to different online information and operation associated with the different regions.

The invention also preferably provides a visual code system which includes a rotation determination feature, a vertical and horizontal tilting determination feature, and a distance determination feature, which allows different rotation, tilting, and distance values to be associated with different information.

The invention further preferably utilizes a visual code system for item selection, information display in textual, graphical (e.g. on the screen of the mobile device or on a nearby electronic display), auditory (e.g., via the mobile device's speaker, headset or earphone), or tactile form (e.g., via phone vibration), and triggering specific operations.

In another application, textual or graphical feedback is superimposed on the camera image itself and correctly aligned ("registered") with the items present in the image, thereby giving the user a sense of "augmented reality."

In yet another application, a visual code system is used in conjunction with printed forms for convenient data entry.

## BRIEF DESCRIPTION OF THE DRAWINGS

FIG. 1 depicts an example of the visual code and its novel features.

FIG. 2 depicts a flowchart showing the steps utilized by a camera-equipped mobile device to decode a visual code.

FIG. 3 depicts a flowchart showing the steps utilised by the code location step of FIG. 2.

FIG. 4 depicts an example of a printed document containing visual codes.

FIG. 5 depicts another example of a printed document containing visual codes.

Fig. 6 depicts an example form for the entry of calendar events.

## BEST MODE (S) FOR CARRYING OUT THE INVENTION

The following presents a detailed description of a preferred embodiment (as well as some alternative embodiments) of the present invention. However, it should be apparent to one skilled in the art that the described embodiment may be modified in form and content to be optimized for a wide variety of situations.

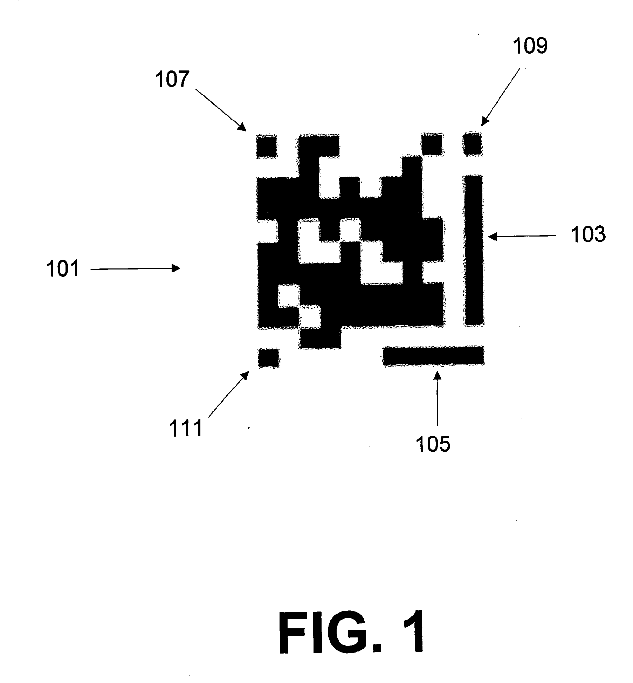

With reference first to FIG. 1, shown is an example of visual code 101 utilized in the present invention. Visual code 101 consists of large guide bar 103 and small guide bar 105 for determining the location and orientation of visual code 101, three cornerstones 107, 109, and 111, for detecting distortion and the data area with the actual code bits. The displayed version of visual code 101 has a capacity of 83 bits, but its design is generic and suitable for extension to a larger number of bits. Visual code 101 can be reliably located even in a low quality image which is small and tilted.

Visual code 101 may be printed utilizing either standard ink or infrared ink. If infrared ink is utilized to print visual code 101, the digital camera must be capable of identifying infrared images. Infrared ink has the advantage that visual code 101 would not be visible to the naked eye. Therefore, if the algorithm of the present invention were constantly running in the background whenever the digital camera of a mobile device was being used, the decoding of visual code 101 could be utilized to make certain information appear.

The three cornerstones 107, 109, and 111 define the coordinate system induced by the code. Cornerstone 107 is located at the origin, or position (0,0). Similarly, cornerstone 109 is said to be located at position (10,0) while cornerstone 111 is located at position (0,10). In this coordinate system, the center of large guide bar 103 is located at position (10,5) while the center of small guide bar 105 is located at position (8,10). The code requires a white space of a single code element around the code (1 unit in the code coordinate system). Multiple visual codes may be printed next to each other, for example arranged in a grid. A white space of a single code element around two neighboring codes (1 unit in the code coordinate system) is required.

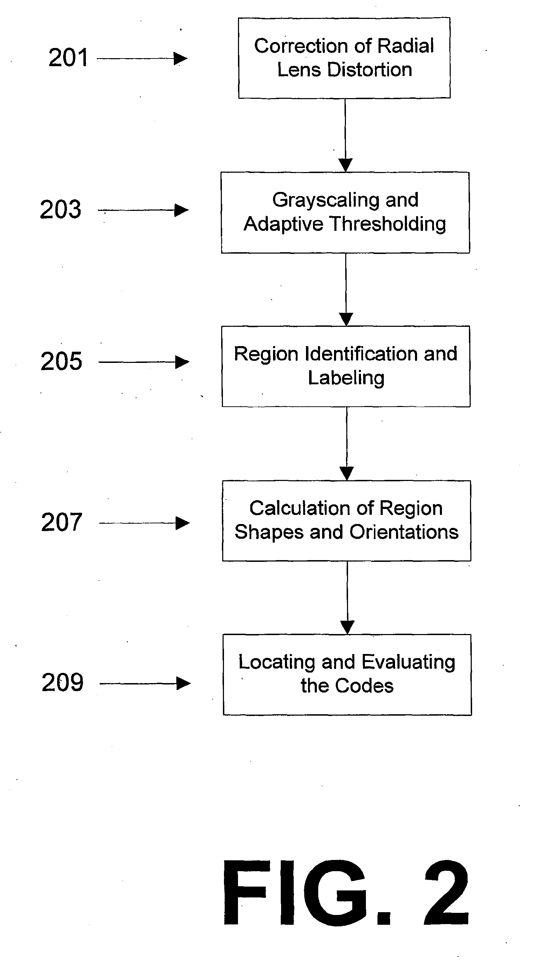

Next, with reference to FIG. 2, shown is a flowchart depicting the steps utilized by a camera-equipped mobile device to decode visual code 101. First, the image captured by the digital camera is corrected for radial distortion in step 201. The image obtained from the digital camera typically shows some amount of barrel distortion. However, radial lens distortion is less an issue with newer phone cameras, especially if the code only occupies a small area of the image. It is corrected by shifting each pixel radially towards the center of the image. The displacement only depends on the distance of the pixel from the image center and not on the particular image to be corrected. The following correction function produces adequate results (w and h are the pixel width and pixel height of the image, respectively, r is the distance from the image center, and $\kappa$ is a constant that reflects the amount of radial distortion of the lens):

$$r = \sqrt{(x_{distorted} - w/2)^2 + (y_{distorted} - h/2)^2}$$

$$x_{undistorted} = (x_{distorted} - w/2)(1 + \kappa r^2) + w/2$$

$$y_{undistorted} = (y_{distorted} - h/2)(1 + \kappa r^2) + h/2$$

For the integrated camera of the Nokia 7650, $\kappa = 6 \times 10^{-7}$ was found acceptable by manual testing. For the newer Nokia 6600, 7610, and 6630, no correction was necessary. Even for the Nokia 7650, code recognition works without correction.

Step 201 is optional, because a single visual code typically only covers a small area of the camera image. In this case, radial lens distortion is not significant. However, for some applications, like those involving precise selection of items in the camera image, this step may increase accuracy.

Next, the image undergoes grayscaling and adaptive thresholding in step 203 because the three color channels in the image often differ in their sharpness and contrast quality. Therefore, the algorithm uses the formula gray = (red + green) / 2 instead of the more straightforward version gray = (red + green + blue) / 3 or the ITU-standardized formula for luminance Y = 0.2126 red + 0.7152 green + 0.0722 blue. This formula is computationally efficient and produces an adequate starting point for thresholding.

An adaptive method is taken to produce a black-and-white version of the gray scaled image, because the brightness of the camera image is not constant and the printed code may be unevenly illuminated. The algorithm uses a (weighted) moving average of the gray values while traversing the image in a snake-like fashion. The average $g_s(n)$ is updated according to the formula:

$$g_s(n) = g_s(n-1) \cdot (1 - \frac{1}{s}) + p_r$$

with $P_n$ denoting the gray value of the current pixel and s the width of the moving average. $g_s$ is initialized with $g_s(0) = \frac{1}{2}cs$, where c is the maximum possible gray value.

The color of the thresholded pixel T(n) is then chosen based on the formula:

$$T(n) = \begin{cases} 1, if \ p_n < \dfrac{g_s(n)}{s} \cdot \dfrac{100-t}{100} \\ 0, otherwise \end{cases}$$

The recommended values for t and s are t=15 and $s = \frac{1}{8}w$, where w is the width of the image.

After the image has undergone grayscaling in step 203, the algorithm next attempts to identify and label the different regions of the image in step 205. This step consists of finding regions of neighboring black pixels, counting them, and assigning a number to each. The algorithm used is a well known two-phase method. In the first phase, the image is traversed row by row, assigning preliminary labels to the regions found. During this process, it may happen that two regions with different labels turn out to be in fact the same region. In this case, the equivalence of the two temporary labels is stored in a table. The second phase resolves the equivalences by merging the corresponding regions and assigns a final label to each region.

Next, the algorithm calculates the different regions' shapes and orientations in step 207. In order to identify candidates for orientation bars among the regions found, the notion of second-order moments is used. The second-order moments of a region consisting of the set of pixels R and having the center of gravity $(\bar{x}, \bar{y})$ are defined as follows:

$$\mu_{xx} = \frac{1}{|R|} \sum_{(x,y) \in R} (x - \bar{x})^2$$

$$\mu_{yy} = \frac{1}{|R|} \sum_{(x,y) \in R} (y - \bar{y})^2$$

$$\mu_{xy} = \frac{1}{|R|} \sum_{(x,y)\in R} (x - \bar{x})(y - \bar{y})$$

where,

$$\bar{x} = \frac{1}{|R|} \sum_{(x,y)\in R} x$$

$$\bar{y} = \frac{1}{|R|} \sum_{(x,y)\in R} y$$

From these moments, an ellipsis E = {(x,y) | dx2+2exy+fy2 ≤ 1} that has the same major and minor axis as the region can be defined by setting:

$$\begin{pmatrix} d & e \\ e & f \end{pmatrix} = \frac{1}{4\mu_{xx}\mu_{yy} - \mu_{xy}^2} \begin{pmatrix} \mu_{yy} & -\mu_{xy} \\ -\mu_{xy} & \mu_{xx} \end{pmatrix}$$

The ratio of the lengths of the major and the minor axis is a good measure for the "eccentricity" of the region: perfect circles and squares have a ratio equal to one whereas line segments have a ratio close to zero. This is very useful for identifying regions with a bar-like shape. Furthermore, the orientation vector of the major axis of the region can be calculated as:

$$\begin{pmatrix} -\sin\alpha \\ \cos\alpha \end{pmatrix}$$

where

$$\alpha = \frac{1}{2} \arctan\left(\frac{2e}{d-f}\right)$$

Once the shapes and orientations of the different regions have been identified, the algorithm performs the step of locating and evaluating the visual codes in step 209. Locating codes in the image is done by looking for guide bar candidates and by finding corresponding cornerstones. Guide bar candidates are found by simply selecting those regions which have a small enough axis ratio (e.g. below 0.05). For each of these candidates, the size and orientation of the region is used to estimate the expected positions of small guide bar 105 and the three cornerstones 107, 109, and 111. It is then checked whether these features are actually present at the estimated positions. Cornerstone candidates found are only accepted if their axis ratio is above a certain limit (as stated earlier, theoretically they should have a ratio equal to one). If any of the code features (cornerstones 107, 109, and 111, and small guide bar 105) is not present for some guide bar candidate, this particular candidate is abandoned and the next one is examined.

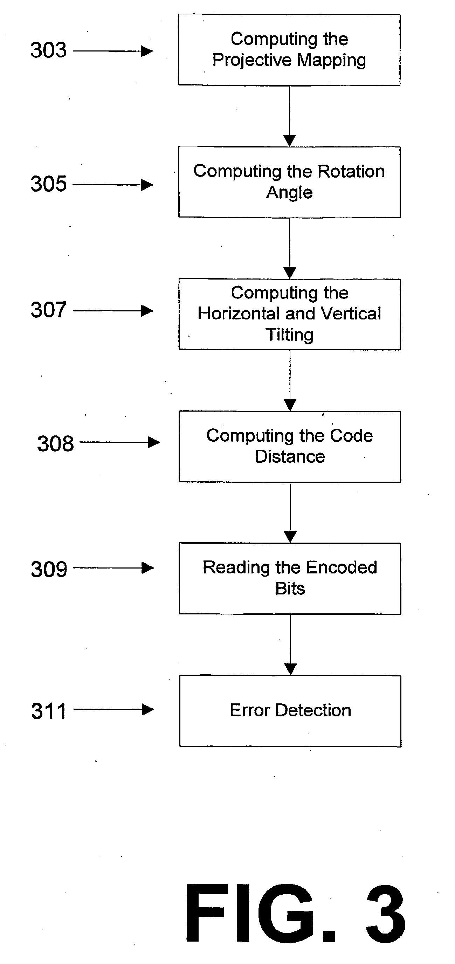

Now, with reference to FIG. 3, shown is a flowchart showing the steps utilized by code location step 209 of FIG. 2. First, the algorithm computes the projective mapping from code coordinates to image coordinates (and the inverse mapping from image coordinates to code coordinates) in step 303. Once a guide bar candidate with all code features has been found, the algorithm assumes that this is indeed a code in the image and starts to read the encoded bits. To that end, the bit positions in the image must be determined, i.e. one needs a function that maps each code bit to an image pixel. Since the code elements are coplanar, there exists a unique homography (projective transformation matrix) between the code plane and the image plane. The projective mapping can be calculated once four corresponding points are known. In the algorithm, the correspondences are the centers of the three cornerstones 107, 109, and 111 plus the center of the small guide bar 105. This induces a code coordinate system with its origin at the upper left corner of the code.

The code coordinates of the upper left cornerstone 107, the upper right cornerstone 109, large guide bar 103, and the lower left cornerstone 111 are defined to be at (0,0), (10,0), (8,10), and (0,10). It is assumed that these elements have been found at image coordinates $(X_i, Y_i)$, $i \in \{0, ..., 3\}$, respectively. A code coordinate $(u,v)$, $u,v \in \{0, ..., 10\}$, is mapped to image coordinate $(x,y)$, where

$$x = \frac{au + bv + 10c}{gu + hv + 10}, \quad y = \frac{du + ev + 10f}{gu + hv + 10}$$

The parameters a to h are calculated from the four reference points $(x_i, y_i)$, $i \in \{0, ..., 3\}$, as follows:

$$\Delta x_1 = x_1 - x_2 \quad \Delta y_1 = y_1 - y_2 \quad \Delta x_2 = x_3 - x_2 \quad \Delta y_2 = y_3 - y_2$$

$$\Sigma x = 0.8\,x_0 - 0.8\,x_1 + x_2 - x_3 \quad \Sigma y = 0.8\,y_0 - 0.8\,y_1 + y_2 - y_3$$

$$g = \frac{\Sigma x\,\Delta y_2 - \Sigma y\,\Delta x_2}{\Delta x_1\,\Delta y_2 - \Delta y_1\,\Delta x_2}$$

$$h = \frac{\Sigma y\,\Delta x_1 - \Sigma x\,\Delta y_1}{\Delta x_1\,\Delta y_2 - \Delta y_1\,\Delta x_2}$$

$$a = x_1 - x_0 + g\,x_1 \quad d = y_1 - y_0 + g\,y_1$$

$$b = x_3 - x_0 + h\,x_3 \quad e = y_3 - y_0 + h\,y_2$$

$$c = x_0 \qquad f = y_0$$

The inverse mapping to the one described above is important for applications which select items visible in the image. Given a pixel coordinate, its corresponding coordinate in the coordinate system induced by the code can thus be obtained. An image coordinate $(x,y)$ is mapped to a code coordinate $(u,v)$ as follows:

$$u = 10 \cdot \frac{Ax + By + C}{Gx + Hy + I}, \quad v = 10 \cdot \frac{Dx + Ey + F}{Gx + Hy + I},$$

with

$$A = e - fh$$

$$B = ch - b$$

$$C = bf - ce$$

$$D = fg - d \quad G = dh - eg$$

$$E = a - cg \quad H = bg - ah$$

$$F = cd - af \quad I = ae - bd$$

The algorithm next computes the rotation angle of the visual code in the image in step 305. It takes on values between 0˚ and 359˚. A code that has the same orientation as the image has rotation angle 0˚. The rotation is determined by mapping the points (0,0) and (100,0) from the code coordinate system to the image coordinate system, resulting in the image points $(a_x, a_y)$, and $(b_x, b_y)$. The rotation angle is then determined as:

$$\alpha = \arctan\{(a_y - b_y)/(a_x - b_x)\} \cdot \frac{180}{\pi}$$

though several special cases have to be considered.

After the rotation angle of the visual code has been computed, the algorithm next determines the horizontal and vertical tilting in step 307. The term "tilting" denotes the amount of inclination of the image plane relative to the code plane. "Horizontal tilting" is the amount of inclination of the image plane relative to the horizontal axis of the visual code. Analogously, "vertical tilting" denotes the amount of inclination of the image plane relative to the vertical axis of the visual code. A tilting value of 1 means no tilting, a value less than 1 means tilting towards the left/top, and a value greater than 1 means tilting towards the right/bottom. The tilting parameters are computed as follows: Four image points with constant distance h (image height) from the image center point in the axis directions of the code coordinate system are computed. They are mapped to corresponding code coordinates and their distances to the center point are computed. The ratios of these distances determine the tilting parameters $t_x$ and $t_y$. They are independent of the size of the code in the image. From these ratios the tilting angles $t_x{}^\alpha$ and $St_y{}^\alpha$ can be determined, if a constant r is known that depends on the camera parameters. It can be obtained experimentally.

$i$ = image coordinates of the image center point
$c$ = CodeCoordinates($i$)

$$x = \mathrm{ImageCoordinates}(c + (1, 0)) - i$$

$$y = \mathrm{ImageCoordinates}(c + (0, 1)) - i$$

$$u = x/|x|$$

$$v = y/|y|$$

$$l = |\mathrm{CodeCoordinates}(i - hu) - c|$$

$$r = |\mathrm{CodeCoordinates}(i + hu) - c|$$

$$t = |\text{CodeCoordinates}(i - hv) - c|$$

$$b = |\text{CodeCoordinates}(i + hv) - c|$$

$$t_x = l/r$$

$$t_y = t/b$$

$$t_x^{\alpha} = \arctan\left(r\frac{t_x - 1}{t_x + 1}\right)$$

$$t_y^{\alpha} = \arctan\left(r\frac{t_y - 1}{t_y + 1}\right)$$

Next, in step 308, the algorithm computes the distance of the code from the camera. If the real code size $s_{real}$ (the distance between the centers of the upper left and the upper right cornerstones of the printed code) and the camera's focal distance f are known, then the metric distance from the camera to the untilted visual code can be computed from $s_{image}$ (the pixel distance between the centers of the upper cornerstones in the camera image) using the pinhole model as ($w_{image}$ is the pixel width of the image)

$$D_{camera,code} = \frac{s_{real} \times f}{s_{image}/w_{image}}.$$

Since $s_{real}$ and f are typically not known and we want to use the code distance for interaction purposes rather than measuring its exact value, we define the distance in terms of the size of the visual code in the image. We set $d_{camera,code} := 100$ for the farthest distance at which a code is recognized in view finder mode. For typical devices this is the case when $s_{image} = 25$ pixels, which amounts to 15.625% of the image width. Hence the distance is computed as

$$d_{camera,code} = \frac{15.625}{s_{image}/w_{image}}.$$

Should $s_{real}$ and f be known, the metric distance can still be computed from $d_{camera,code}$.

It should be obvious to one skilled in the art that steps 303, 305, 307, 308, and 309 can be performed in any order because each step is discrete and outputs a different parameter or result.

Once the positions of the guide bars 103 and 105 and cornerstones 107, 109, and 111 have been identified and a suitable projective mapping (from code coordinates to image coordinates) has been computed, the algorithm reads the encoded bits in step 309 by simply testing the appropriate pixels (x,y) of the black-and-white image, using code coordinates (u,v) with u, v ∈ {0, ..., 10} and (x,y) - ImageCoordinates((u,v)).

Error detection may optionally be performed in step 311. The (83,76,3) linear code employed encodes a 76-bit ID to an 83-bit codeword. The resulting hamming distance is three, which should be sufficient to identify wrong codes with a high probability. Alternatively, other error detecting or error correcting codes, such as Reed-Solomon codes, might be used for increased reliability and robustness against bit errors. This might come at the expense of slightly higher processing times and a lower number of bits actually available for data storage. As an example, 15 bits of the raw 83 bits might be used for Reed-Solomon error correcting codes, leaving 68 bits for data storage.

**Applications of the Algorithm**

**A. Rotation Angle and Tilting Determination**

In addition to the code coordinate of the image center, the recognition algorithm provides the orientation of the mobile device relative to the code. In particular, the algorithm provides the rotation of the code in the image, the viewing position (from left, from right, from top, from bottom), the amount of tilting of the image plane relative to the code plane, and the distance from the code to the camera. The projective mapping (planar homography) between the image plane and the code plane that the recognition algorithm implements, allows the mapping of arbitrary points given in image coordinates to corresponding points in code coordinates and vice versa.

**B. Item Selection**

The code coordinate system and the orientation determination features enable a number of interesting application scenarios involving the selection of items in printed documents. An example is the selection of articles depicted in printed mail-order catalogs. A single code is sufficient as long as the code coordinates of the items are known. This can be achieved by content creation software that creates "image maps" for the code and its associated sensitive areas. Articles in mail-order catalogs can thus be scanned, stored in the mobile device, and current information concerning the articles can be retrieved. The order can then be placed using the wireless communication channel provided by the mobile device.

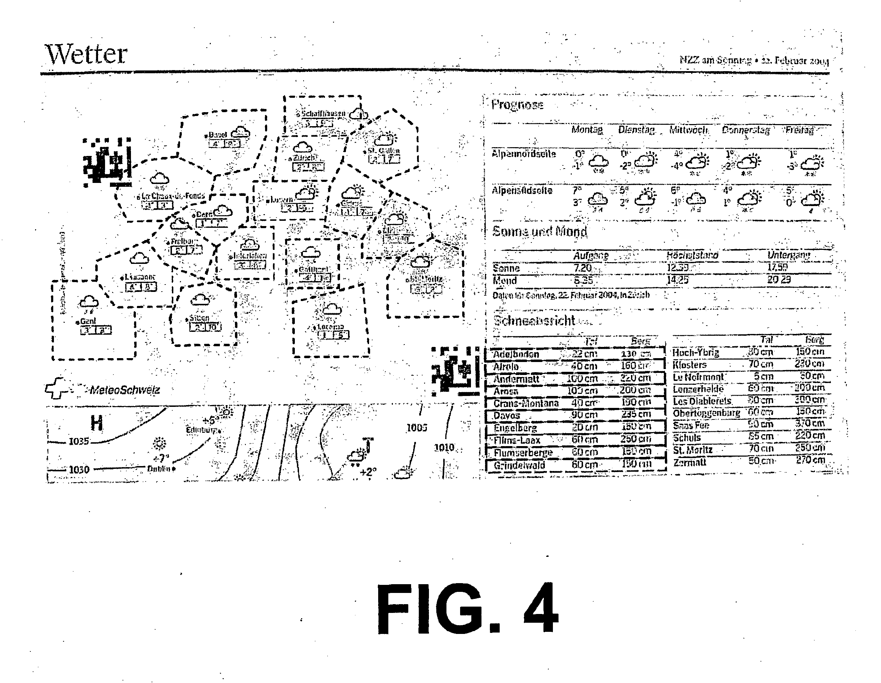

For example, in FIG. 4, shown is an example of a printed document containing visual codes. The regions on the map and the entries in the table are individually mapped to different URLs and thus associated to online content.

In newspapers, online background information to articles, advertisements, or information which quickly gets obsolete, like weather forecasts or stock quotes, can be linked via visual codes. By using the code coordinate system, a single code located near several items of interest suffices. The exact area aimed at, like the local weather forecast, can be determined via the projective mapping by computing the vertical and horizontal distances to the visual code element. In a table of stock quotes, the row and column aimed at, and thus the desired information, can be obtained in the same manner. FIG. 4 shows a cut-out of a newspaper page containing a geographic map with the current weather data and a table containing the snow heights for various regions. The dotted lines drawn on the newspaper page indicate sensitive areas that are individually linked to online content. Such a mapping can be created with suitable content creation software. As a prototype, we developed a mapping tool which allows to draw the areas into the image and to specify the associated URL for each region. The tool computes the coordinates of these areas in the coordinate systems of the codes present in the image, and stores this data as an XML file. Multiple URLs can be specified for each region by taking into account further parameters that are provided by the code system, such as rotation and tilting. As shown in FIG. 4, a single code suffices to select the area and table entries, respectively. By rotating the mobile device, different aspects of the online information can be chosen: In the example, vertical orientation shows the snow depth for the selected area, while a slight rotation shows the current temperature.

As another application, visual codes can be used in mobile marketing to automate the input of coupon numbers into the mobile device. An example are SMS campaigns of soft-drink producers: The soft-drink bottles contain numbers (represented by visual codes), which can be sent as an SMS and thus allow the participation in lotteries. On TV, visual codes could be used for interactive input of answers to multiple choice questions in ad hoc surveys and quizzes or for the selection of candidates in a TV show. The code coordinates and the orientation of the device can serve as additional input parameters (in addition to the code value), for example to answer a multiple choice question.

Further application possibilities concern simplifying the interaction with the mobile device itself. Telephone numbers, for example, can be encoded as visual codes and printed on business cards or in phone books. Depending on the orientation of the code in the image, the device either immediately calls the encoded phone number, stores the virtual business card in the device's memory, or - for mobile phone numbers - starts the device's SMS editing application. Parts of the device's user interface, like deeply nested menus, can be externalized by associating them with a visual code and printing them on paper or showing them on a large screen.

A. further possible application scenario of the presented invention is adding online content and operations to printed documents, like flyers, magazines, etc. An example online operation is selling tickets for events, theaters, or movies via the mobile phone.

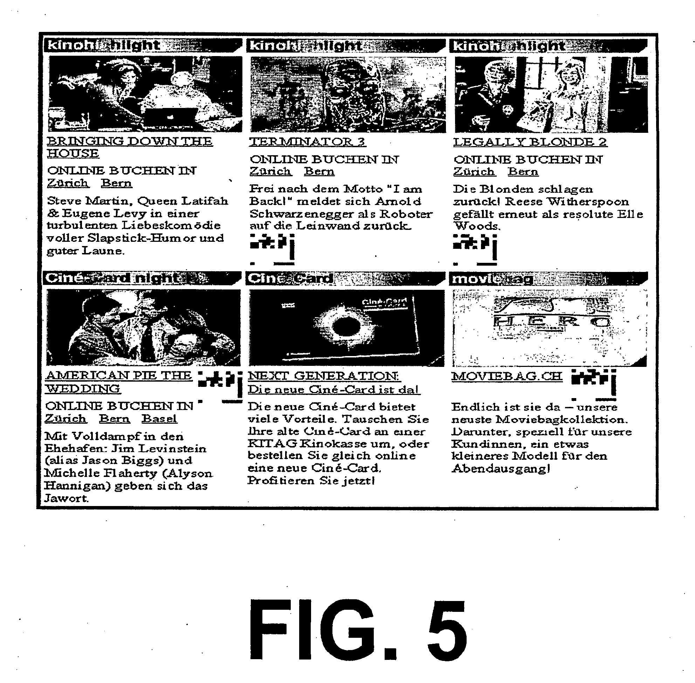

Fig. 5. shows a page of a printed television magazine, which is equipped with embedded visual codes. By aiming at the printed visual codes, movie plot outlines can be shown, a list of the cast can be given, movie ratings can be displayed or submitted, movie trailers can be started, and tickets can be directly booked via the mobile phone.

## C. Form Entry

Visual codes can also be combined with printed forms for the simplification of form input, in which the mobile device provides a wireless communication channel for conveniently and cheaply sending back the entered data. The fields of these forms can be check boxes, rulers, and canvas fields for free-hand textual or graphical input. Using the frame surrounding the form as a marker, the individual form elements can be precisely localized. The projective mapping of the recognition algorithm allows to "unwarp" parts of the image as well as the image as a whole.

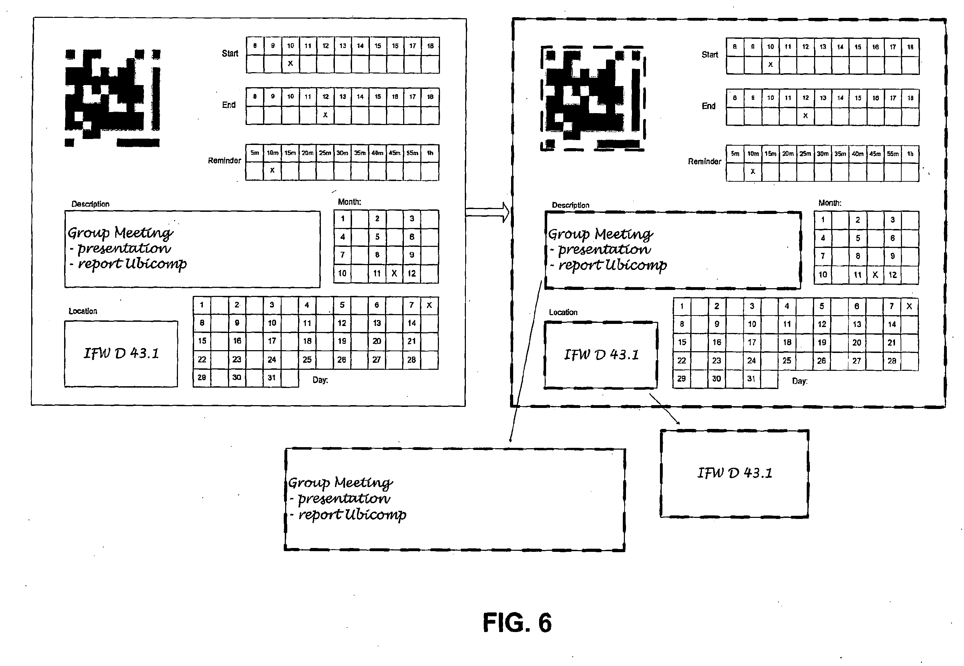

Fig. 6 shows an example form for the entry of calendar events. The recognition algorithm first recognizes the code and locates the edges of the frame. Then the checkboxes located in the form are scanned for check marks. Finally, the canvas fields are "unwarped", i.e. their tilting is removed as shown in the lower part of Fig. 6, and stored.

To define the forms, a markup language is used, which describes the structure of a form, including the positions and kinds of input elements it contains. The code is first used as a key to retrieve the form description from an online server. After interpreting the retrieved markup, user input can be categorized according to field type and sent back to the server.

## Claims

**1.** A method of decoding a visual code (101) comprising:

(a) capturing an image including a visual code which is associated with multiple regions of the image, each region having a shape ;
(b) greyscaling the image;
(c) thresholding the image;
(d) locating and evaluating the visual code (101) within the image;
(e) calculating the shapes of regions of interest within the image that are associated with the visual code (101);
the method being **characterised in that**:
(f) the image is captured using a mobile device equipped with a digital camera;
(g) each said region is associated with respective URL online information;
and further **characterised by**:
(h) determining an orientation of the mobile device relative to the visual code and the regions when aiming to a selected region; and
(i) displaying said information for the selected region on the mobile device in dependence upon the device orientation.

**2.** A method according to claim 1 further including correcting the image for radial lens distortion prior to greyscaling.

**3.** A method according to claim 1 further including:

computing a first projective mapping of the visual code (101) from an image coordinate system to a visual code coordinate system;
computing a second projective mapping of the visual code (101) from the visual code coordinate system to the image coordinate system;
computing a rotation angle of the visual code (101);
computing horizontal and vertical tilting values of the visual code (101);
computing a distance of the visual code (101) from the mobile device; and
reading the encoded bits in the visual code (101).

**4.** A method according to claim 3, further including performing error detection on the visual code (101).

**5.** A method according to claim 3, wherein the visual code consists of three cornerstones (107,109,111), a small guide bar (105), and a large guide bar (103).

**6.** A method according to claim 5, wherein an individual visual code is located by identifying the cornerstones (107,109,111), the small guide bar (105), and the large guide bar (103).

**7.** A method according to claim 3, wherein the visual code consists of three cornerstones (107,109,111), a small guide bar (105), and a large guide bar (103), and wherein an orientation of the small guide bar and the large guide bar are used when computing the rotation angle of the visual code (101), computing the distance of the visual code, and computing the tilt of the visual code.

**8.** A method according to claim 1, wherein, greyscaling the image is performed by calculating the value of each greyscale pixel by averaging the value of red and green pixels.

**9.** A method according to claim 8, wherein the grayscale image is converted to a black and white image using a weight-moving average algorithm.

**10.** A method according to claim 3, wherein the small guide bar (105) and the large guide bar (103) are identified by locating regions of the image which have an axis ratio within a predetermined range.

**11.** A method according to claim 5, wherein the three cornerstones (107, 109, 111) and the large guide bar (103) are located at position (0, 0), (10, 0) and (0,10), and wherein the centre of the large guide bar is located at position (8,10) in the visual code coordinate system.

**12.** A method according to claim 3, wherein at least one of the rotation angle, horizontal tilting value, vertical tilting angle, and distance of the visual code (101) is used to select options from a menu.

**13.** A method according to claim 5, wherein multiple visual codes are arranged in a grid to store data across multiple visual codes, and further including identifying the grid of codes.

**14.** A method according to claim 1, wherein the decoding occurs in real-time.

**15.** A method according to claim 3, wherein the orientation of the mobile device is utilised as a parameter to select an entry from a database.

**16.** A method according to claim 15, wherein the database associates different uniform resource locators with at least one orientation value.

**17.** A method according to claim 15, wherein the database associates the orientation angles with form entries, thereby allowing a use of the mobile device to select entries from a form by altering the orientation of the mobile device.

**18.** A method according to claim 15, wherein, the database associates the orientation angles with a move plot outline, a video clip, an audio file, or a movie review.

**19.** A method according to claim 1, wherein the visual code (101) is printed using infrared ink and wherein the digital camera is an infrared camera which captures the visual code as an infrared visual code.

**20.** A method according to claim 3, wherein a target point, expressed in the visual code coordinate systems of an image displayed on a screen of the camera, is used as a parameter to select an entry from a database.

**21.** A method according to claim 14, further including a graphical overlay over an image displayed on a screen of the camera, wherein the overlayed graphic is geometrically aligned with objects in the displayed image as the mobile device moves and the orientation changes.

**22.** A method according to claim 1, wherein pointing the digital camera at the visual code (101) is facilitated by a cross hair that is displayed on a screen of the mobile device.

**23.** A method according to claim 22, wherein the screen of the mobile device is a touch screen, and wherein the position of the cross hair may be specified by using a stylus to specify a target point.

**24.** A method according to claim 4, wherein the error detection is performed using Reed-Solomon error detection.

**Patentansprüche**

**1.** Verfahren zum Decodieren eines visuellen Codes (101), umfassend:

(a) Aufnehmen eines Bilds enthaltend einen visuellen Code, der mehreren Bereichen des Bilds zugeordnet wird, wobei jeder Bereich eine Gestalt hat;

(b) Grauskalieren des Bilds;

(c) Schwellenwert-Bestimmung für das Bild;

(d) Lokalisieren und Auswerten des visuellen Codes (101) innerhalb des Bilds;

(e) Berechnen der Gestalt von dem visuellen Code (101) zugeordneten interessierenden Bereichen innerhalb des Bilds; welches Verfahren **dadurch gekennzeichnet ist, dass**

(f) das Bild unter Verwendung einer mit einer Digitalkamera ausgestatteten mobilen Einrichtung aufgenommen wird;

(g) jedem Bereich eine entsprechende URL-Online-Information zugeordnet wird;

und weiters **gekennzeichnet durch**

(h) Bestimmen einer Ausrichtung der mobilen Einrichtung relativ zum visuellen Code und zu den Bereichen bei Anvisieren eines ausgewählten Bereichs; und

(i) Anzeigen der Information für den ausgewählten Bereich auf der mobilen Einrichtung in Abhängigkeit von der Ausrichtung der Einrichtung.

2. Verfahren nach Anspruch 1, weiters umfassend das Korrigieren des Bilds hinsichtlich radialer Linsenverzerrung vor dem Grauskalieren.

3. Verfahren nach Anspruch 1, weiters umfassend:

Berechnen einer ersten Projektionsabbildung des visuellen Codes (101) aus einem Bild-Koordinatensystem auf ein visueller-Code-Koordinatensystem;

Berechnen einer zweiten Projektionsabbildung des visuellen Codes (101) aus dem visueller-Code-Koordinatensystem auf das Bild-Koordinatensystem;

Berechnen eines Rotationswinkels des visuellen Codes (101);

Berechnen des horizontalen und des vertikalen Neigungswerts des Codes (101);

Berechnen eines Abstands des visuellen Codes (101) von der mobilen Einrichtung; und

Lesen der codierten Bits im visuellen Code (101).

4. Verfahren nach Anspruch 3, weiters umfassend das Durchführen einer Fehlerbestimmung am visuellen Code (101).

5. Verfahren nach Anspruch 3, wobei der visuelle Code aus drei Eckpunkten (107, 109, 111), einer kleinen Führungsleiste (105) und einer großen Führungsleiste (103) besteht.

6. Verfahren nach Anspruch 5, wobei ein individueller visueller Code durch Identifizieren der Eckpunkte (107, 109, 111), der kleinen Führungsleiste (105) und der großen Führungsleiste (103) lokalisiert wird.

7. Verfahren nach Anspruch 3, wobei der visuelle Code aus drei Eckpunkten (107, 109, 111), einer kleinen Führungsleiste (105) und einer großen Führungsleiste (103) besteht, und wobei eine Ausrichtung der kleinen Führungsleiste und der großen Führungsleiste bei der Berechnung des Rotationswinkels des visuellen Codes (101), bei der Berechnung des Abstands des visuellen Codes und bei der Berechnung der Neigung des visuellen Codes herangezogen wird.

8. Verfahren nach Anspruch 1, wobei das Grauskalieren des Bilds durch Berechnen des Werts jedes Grauskalierungspixels durch Mitteln des Werts von roten und grünen Pixeln ausgeführt wird.

9. Verfahren nach Anspruch 8, wobei das Grauskalierungsbild unter Verwendung eines Gewicht-bewegenden Mittelungsalgorithmus in ein Schwarz-Weiß-Bild umgewandelt wird.

10. Verfahren nach Anspruch 3, wobei die kleine Führungsleiste (105) und die große Führungsleiste (103) durch Lokalisieren von Bereichen des Bilds identifiziert werden, die ein Achsenverhältnis innerhalb eines vorherbestimmten Bereichs haben.

11. Verfahren nach Anspruch 5, wobei die drei Eckpunkte (107, 109, 111) und die große Führungsleiste (103) in Position (0,0), (10,0) bzw. (0,10) liegen, und wobei der Mittelpunkt der großen Führungsleiste in Position (8,10) im visuellen Code-Koordinatensystem liegt.

**12.** Verfahren nach Anspruch 3, wobei zumindest der Rotationswinkel, der horizontale Neigungswert, der vertikale Neigungswinkel und/oder der Abstand des visuellen Codes (101) zum Auswählen von Optionen aus einem Menü verwendet wird.

**13.** Verfahren nach Anspruch 5, wobei mehrere visuelle Codes in einem Gitter angeordnet werden, um Daten über mehrere visuelle Codes zu speichern, und weiters umfassend das Identifizieren des Codegitters.

**14.** Verfahren nach Anspruch 1, wobei das Decodieren in Echtzeit erfolgt.

**15.** Verfahren nach Anspruch 3, wobei die Ausrichtung der mobilen Einrichtung als Parameter zum Auswählen einer Eingabe aus einer Datenbank verwendet wird.

**16.** Verfahren nach Anspruch 15, wobei die Datenbank verschiedene einheitliche Quellenpositionsanzeiger mindestens einem Ausrichtungswert zuordnet.

**17.** Verfahren nach Anspruch 15, wobei die Datenbank die Ausrichtungswinkel Formulareingaben zuordnet, wodurch die Verwendung der mobilen Einrichtung zum Auswählen von Eingaben aus einem Formular durch Verändern der Ausrichtung der mobilen Einrichtung ermöglicht wird.

**18.** Verfahren nach Anspruch 15, wobei die Datenbank die Ausrichtungswinkel einer Bewegungsdiagrammübersicht, einem Videoclip, einer Audiodatei oder einer Filmrezension zuordnet.

**19.** Verfahren nach Anspruch 1, wobei der visuelle Code (101) unter Verwendung einer Infrarottinte gedruckt wird, und wobei die Digitalkamera eine Infrarotkamera ist, die den visuellen Code als visuellen Infrarotcode aufnimmt.

**20.** Verfahren nach Anspruch 3, wobei ein Zielpunkt, der in den visuellen Code-Koordinatensystemen eines auf einem Bildschirm der Kamera dargestellten Bilds ausgedrückt wird, als Parameter zum Auswählen einer Eingabe aus einer Datenbank verwendet wird.

**21.** Verfahren nach Anspruch 14, weiters enthaltend eine grafische Überlagerung über ein auf einem Bildschirm der Kamera dargestelltes Bild, wobei die überlagerte Grafik geometrisch mit Gegenständen im dargestellten Bild abgeglichen wird, wenn sich die mobile Einrichtung bewegt und die Ausrichtung ändert.

**22.** Verfahren nach Anspruch 1, wobei das Richten der Digitalkamera auf den visuellen Code (101) durch ein Fadenkreuz erleichtert wird, welches auf einem Bildschirm der mobilen Einrichtung angezeigt wird.

**23.** Verfahren nach Anspruch 22, wobei der Bildschirm der mobilen Einrichtung ein Touchscreen ist, und wobei die Position des Fadenkreuzes durch Verwendung eines Stifts zum Bestimmen eines Zielpunkts spezifiziert werden kann.

**24.** Verfahren nach Anspruch 4, wobei die Fehlerbestimmung unter Verwendung einer Reed-Solomon-Fehlererkennung erfolgt.

**Revendications**

**1.** Procédé de décodage d'un code visuel (101) consistant à :

(a) capturer une image contenant un code visuel qui est associé à des régions multiples de l'image, chaque région ayant une forme ;
(b) mettre l'image en niveaux de gris ;
(c) seuiller l'image ;
(d) localiser et évaluer le code visuel (101) à l'intérieur de l'image ;
(e) calculer les formes des régions d'intérêt à l'intérieur de l'image qui sont associées au code visuel (101) ;
le procédé étant **caractérisé en ce que** :
(f) l'image est capturée au moyen d'un dispositif mobile équipé d'une caméra numérique ;
(g) chaque dite région est associée à des informations en ligne d'URL respectives ;
(h) déterminer une orientation du dispositif mobile par rapport au code visuel et aux régions lorsque l'on vise une région choisie ; et

(i) afficher lesdites informations pour la région choisie sur le dispositif mobile en fonction de l'orientation du dispositif.

**2.** Procédé selon la revendication 1, consistant en outre à corriger l'image par rapport à la distorsion radiale de l'objectif avant mise en niveaux de gris.

**3.** Procédé selon la revendication 1, consistant en outre à :

calculer un premier mappage projectif du code visuel (101) d'un système de coordonnées d'image sur un système de coordonnées de code visuel ;
calculer un second mappage projectif du code visuel (101) du système de coordonnées de code visuel sur le système de coordonnées d'image ;
calculer un angle de rotation du code visuel (101) ;
calculer des valeurs d'inclinaison horizontale et verticale du code visuel (101) ;
calculer une distance du code visuel (101) depuis le dispositif mobile ; et
lire les bits codés dans le code visuel (101).

**4.** Procédé selon la revendication 3, consistant en outre à réaliser la détection d'erreur sur le code visuel (101).

**5.** Procédé selon la revendication 3, dans lequel le code visuel est constitué de trois pierres angulaires (107, 109, 111), d'une petite barre de guidage (105) et d'une grosse barre de guidage (103).

**6.** Procédé selon la revendication 5, dans lequel un code visuel individuel est localisé en identifiant les pierres angulaires (107, 109, 111), la petite barre de guidage (105) et la grosse barre de guidage (103).

**7.** Procédé selon la revendication 3, dans lequel le code visuel est constitué de trois pierres angulaires (107, 109, 111), d'une petite barre de guidage (105) et d'une grosse barre de guidage (103), et dans lequel des orientations de la petite barre de guidage et de la grosse barre de guidage sont utilisées lors du calcul de l'angle de rotation du code visuel (101), du calcul de la distance du code visuel et du calcul de l'inclinaison du code visuel.

**8.** Procédé selon la revendication 1, dans lequel la mise de l'image en niveaux de gris est réalisée en calculant la valeur de chaque pixel de niveau de gris en faisant la moyenne de la valeur des pixels rouge et vert.

**9.** Procédé selon la revendication 8, dans lequel l'image en niveau de gris est convertie en une image en noir et blanc au moyen d'un algorithme de moyenne mobile pondérée.

**10.** Procédé selon la revendication 3, dans lequel la petite barre de guidage (105) et la grosse barre de guidage (103) sont identifiées en localisant les régions de l'image qui ont un rapport d'axe à l'intérieur d'une plage prédéterminée.

**11.** Procédé selon la revendication 5, dans lequel les trois pierres angulaires (107, 109, 111) et la grosse barre de guidage (103) sont situées à la position (0,0), (10,0) et (0,10) et dans lequel le centre de la grosse barre de guidage est situé à la position (8,10) dans le système de coordonnées du code visuel.

**12.** Procédé selon la revendication 3, dans lequel au moins un de l'angle de rotation, de la valeur d'inclinaison horizontale, de l'angle d'inclinaison verticale et de la distance du code visuel (101) est utilisé pour choisir les options d'un menu.

**13.** Procédé selon la revendication 5, dans lequel des codes visuels multiples sont agencés dans une grille pour stocker des données sur les codes visuels multiples, et consistant en outre à identifier la grille de codes.

**14.** Procédé selon la revendication 1, dans lequel le décodage se produit en temps réel.

**15.** Procédé selon la revendication 3, dans lequel l'orientation du dispositif mobile est utilisée comme paramètre pour choisir une entrée dans une base de données.

**16.** Procédé selon la revendication 15, dans lequel la base de données associe différents localisateurs de ressources uniformes à au moins une valeur d'orientation.

**17.** Procédé selon la revendication 15, dans lequel la base de données associe les angles d'orientation aux entrées de formes, permettant ainsi une utilisation du dispositif mobile pour choisir les entrées à partir d'une forme en modifiant l'orientation du dispositif mobile.

**18.** Procédé selon la revendication 15, dans lequel la base de données associe les angles d'orientation à un aperçu de l'intrigue d'un film, un clip vidéo, un fichier audio ou une critique de film.

**19.** Procédé selon la revendication 1, dans lequel le code visuel (101) est imprimé au moyen d'encre infrarouge et dans lequel la caméra numérique est une caméra infrarouge qui capture le code visuel en tant que code visuel infrarouge.

**20.** Procédé selon la revendication 3, dans lequel un point cible, exprimé dans les systèmes de coordonnées de code visuel d'une image affichée sur un écran de la caméra, est utilisé comme paramètre pour choisir une entrée à partir d'une base de données.

**21.** Procédé selon la revendication 14, comprenant en outre une superposition graphique sur une image affichée sur un écran de la caméra, dans lequel le graphique superposé est aligné géométriquement sur des objets dans l'image affichée lorsque le dispositif mobile se déplace et que l'orientation change.

**22.** Procédé selon la revendication 1, dans lequel le pointage de la caméra numérique sur le code visuel (101) est facilité par un réticule qui s'affiche sur un écran du dispositif mobile.

**23.** Procédé selon la revendication 22, dans lequel l'écran du dispositif mobile est un écran tactile, et dans lequel la position du réticule peut être spécifiée au moyen d'un stylet pour spécifier un point cible.

**24.** Procédé selon la revendication 4, dans lequel la détection d'erreur est réalisée en utilisant la détection d'erreur de Reed-Solomon.

FIG. 1

201 →

Correction of Radial
Lens Distortion

203 →

Grayscaling and
Adaptive Thresholding

205 →

Region Identification and
Labeling

207 →

Calculation of Region
Shapes and Orientations

209 →

Locating and Evaluating
the Codes

# FIG. 2

303 →  Computing the
Projective Mapping

305 →  Computing the Rotation
Angle

307 →  Computing the
Horizontal and Vertical
Tilting

308 →  Computing the Code
Distance

309 →  Reading the Encoded
Bits

311 →  Error Detection

# FIG. 3

# FIG. 4

kinoh.hlight · kinoh.hlight · kinoh.hlight

BRINGING DOWN THE HOUSE

ONLINE BUCHEN IN Zürich Bern

Steve Martin, Queen Latifah & Eugene Levy in einer turbulenten Liebeskomödie voller Slapstick-Humor und guter Laune.

TERMINATOR 3

ONLINE BUCHEN IN Zürich Bern

Frei nach dem Motto "I am Back!" meldet sich Arnold Schwarzenegger als Roboter auf die Leinwand zurück.

LEGALLY BLONDE 2

ONLINE BUCHEN IN Zürich Bern

Die Blonden schlagen zurück! Reese Witherspoon gefällt erneut als resolute Elle Woods.

Ciné-Card night · Ciné-Card · moviebag

AMERICAN PIE THE WEDDING

ONLINE BUCHEN IN Zürich Bern Basel

Mit Volldampf in den Ehehafen: Jim Levinstein (alias Jason Biggs) und Michelle Flaherty (Alyson Hannigan) geben sich das Jawort.

NEXT GENERATION: Die neue Ciné-Card ist da!

Die neue Ciné-Card bietet viele Vorteile. Tauschen Sie Ihre alte Ciné-Card an einer KITAG Kinokasse um, oder bestellen Sie gleich online eine neue Ciné-Card. Profitieren Sie jetzt!

MOVIEBAG.CH

Endlich ist sie da – unsere neuste Moviebagkollektion. Darunter, speziell für unsere Kundinnen, ein etwas kleineres Modell für den Abendausgang!

# FIG. 5

**FIG. 6**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6604682 B2